(19) Europäisches Patentamt
European Patent Office
Office européen des brevets

(11) **EP 3 979 139 A1**

(12) **EUROPEAN PATENT APPLICATION**

(43) Date of publication:
**06.04.2022 Bulletin 2022/14**

(21) Application number: **21183685.3**

(22) Date of filing: **05.07.2021**

(51) International Patent Classification (IPC):
**G06N 3/04** (2006.01)  **G06N 3/08** (2006.01)

(52) Cooperative Patent Classification (CPC):
**G06N 3/0454; G06N 3/08**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.09.2020 JP 2020165332**

(71) Applicant: **FUJITSU LIMITED**
**Kanagawa 211-8588 (JP)**

(72) Inventors:
• **Yasutomi, Suguru**
 **Kanagawa, 211-8588 (JP)**
• **Hayase, Tomohiro**
 **Kanagawa, 211-8588 (JP)**
• **Katoh, Takashi**
 **Kanagawa, 211-8588 (JP)**

(74) Representative: **Hoffmann Eitle**
**Patent- und Rechtsanwälte PartmbB**
**Arabellastraße 30**
**81925 München (DE)**

(54) **PROGRAM, INFORMATION PROCESSING DEVICE, AND INFORMATION PROCESSING METHOD**

(57)    A program that causes a computer to execute a process, the process includes acquiring a first machine learning model trained using a training data set including specific data and a second machine learning model not trained with the specific data; and retraining the first machine learning model so that an output of the first machine learning model and an output of the second machine learning model when data corresponding to the specific data is input get close to each other.

FIG. 4

**Description**

FIELD

The embodiment discussed herein is related to a program, an information processing device, and an information processing method.

BACKGROUND

Deep neural networks (DNNs) are known as machine learning models that solve problems such as regression and classification.

Continuous learning is intended to increase the ability of a model by sequentially giving data to the model such as the DNN. In the presence of a learned DNN, if this learned DNN is learned with other data in an attempt to learn new things, previously learned content may be erased by catastrophic forgetting.

Therefore, many methods for preventing the catastrophic forgetting have been discussed.

Kirkpatrick, James, et al. "Overcoming catastrophic forgetting in neural networks." Proceedings of the national academy of sciences 114.13 (2017): 3521-3526 is disclosed as related art.

SUMMARY

[TECHNICAL PROBLEM]

However, for the continuous learning, there are some cases where it is necessary not only to prevent the catastrophic forgetting but also to selectively forget the learned content. For example, in a case of receiving an attack such as poisoning that performs an attack using a specific method by a back door of a system, it is assumed to erase information of a specific user for privacy protection. Furthermore, in a case of learning a medical diagnostic image that includes patient information or learning an image of a car that includes a license plate, it is also assumed that a phenomenon called leakage occurs in which personal information, and the like not related to an intended task are input.

In one aspect, it is intended to enable modification of a learned model independently of past training data.

[SOLUTION TO PROBLEM]

According to an aspect of the embodiments, an apparatus includes a program that causes a computer to execute a process, the process includes acquiring a first machine learning model trained using a training data set including specific data and a second machine learning model not trained with the specific data; and retraining the first machine learning model so that an output of the first machine learning model and an output of the second machine learning model when data corresponding to the specific data is input get close to each other.

[ADVANTAGEOUS EFFECTS OF INVENTION]

In one aspect, a learned model can be modified independently of past training data.

BRIEF DESCRIPTION OF DRAWINGS

FIG. 1 is a diagram for describing parameter change processing by elastic weight consolidation (EWC);
FIG. 2 is a block diagram schematically illustrating a hardware configuration example of an information processing device in an example of an embodiment;
FIG. 3 is a block diagram schematically illustrating a software configuration example of the information processing device illustrated in FIG. 2;
FIG. 4 is a diagram illustrating relearning processing in the information processing device illustrated in FIG. 2;
FIG. 5 is a diagram illustrating a production line to be relearned for defect inspection in the information processing device illustrated in FIG. 2;
FIG. 6 is a diagram for describing data acquisition processing from the production line illustrated in FIG. 5;
FIG. 7 is a diagram for describing defect inspection learning processing for the production line illustrated in FIG. 5;
FIG. 8 is a diagram for describing defect inspection additional learning processing for the production line illustrated in FIG. 5;

FIG. 9 is a diagram for describing defect inspection model application processing for the production line illustrated in FIG. 5;

FIG. 10 is a diagram for describing defect inspection model evaluation processing for the production line illustrated in FIG. 5;

FIG. 11 is a diagram for describing defect inspection forgetting processing for the production line illustrated in FIG. 5;

FIG. 12 is a flowchart for describing relearning processing in the information processing device illustrated in FIG. 2; and

FIG. 13 is a table exemplifying correct answer rates of a learning model before and after forgetting learning data in the information processing device illustrated in FIG. 2.

## DESCRIPTION OF EMBODIMENTS

[A] Related Example

To forget specific data in relearning a learning model, if data used in previous learning remains, a data set is created by removing data to be forgotten from the data used in the previous learning and simply relearning the data set.

For example, to learn handwritten numbers from 0 to 9 and forget 0, relearning is simply performed using a data set from 1 to 9. That is, 0 is forgotten by causing catastrophic forgetting.

However, there are some cases where the data used in the previous learning does not remain due to circumstances such as performing learning using data temporarily provided by a customer. Furthermore, in a case where the data used in the previous learning is large, relearning may take a long time.

Therefore, it is assumed to give a random label to the data to be forgotten and learn the data.

For example, to remember the handwritten numbers from 0 to 9 and forget 0, relearning is simply performed giving the random label to 0.

Meanwhile, for data that is not desired to be forgotten (for example, the numbers from 0 to 9), a method of including the data used in the previous learning in the re-learning to prevent the catastrophic forgetting may be used. As the method of preventing the catastrophic forgetting, for example, a regularization term for preventing forgetting can be constructed by calculating through previous learning data only once by EWC.

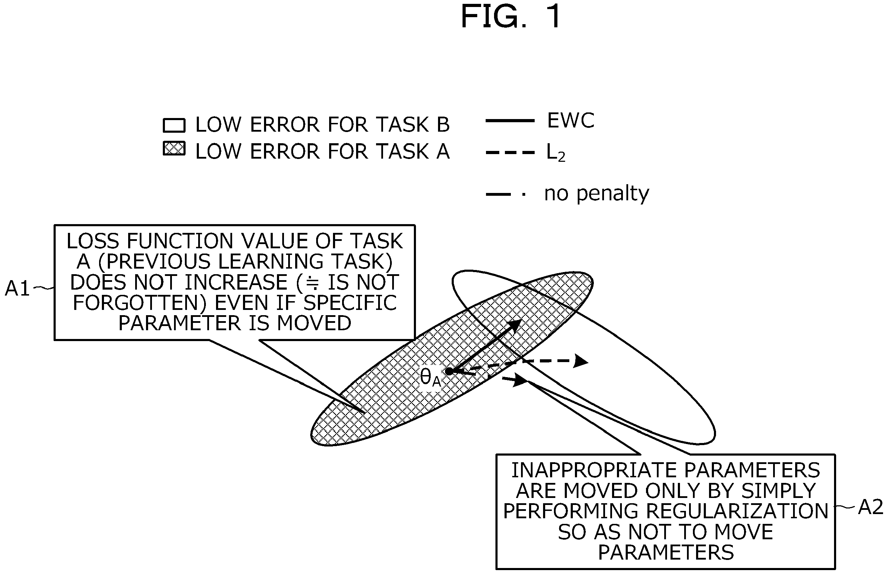

FIG. 1 is a diagram for describing parameter change processing by EWC.

EWC is a method of calculating moving which parameters is unlikely to forget the previous learning content, and mainly operating those parameters in the next learning.

Assume relearning processing from task A (for example, learning handwritten numbers from 0 to 9) to task B (for example, learning to forget 0). The hatched ellipse illustrated in FIG. 1 represents a low error for the task A, and the plain ellipse represents a low error for the task B.

As illustrated by sign A1, a loss function value of the task A (in other words, a previous learning task) does not increase even if a specific parameter is moved. In other words, there is a high possibility that the data to be forgotten is not forgotten.

The low error for the task B is guaranteed in parameter change by EWC indicated by the solid arrow and parameter change by $L_2$ indicated by the broken line arrow. Note that $L_2$ is an operation of performing a change not to deviate from a parameter $\theta_A$ illustrated in the center of the ellipse.

Meanwhile, in no penalty illustrated by the alternate long and short dash line as illustrated by sign A2, only regularization is simply performed so as not to move the parameters. Therefore, inappropriate parameters are moved.

In EMC, moving which parameter increases a quadratic approximation of a loss function is calculated using the data set used in the previous learning and the loss function, and a calculation result is added as a loss to the regularization term.

An i-th element of a parameter $\theta$ is $\theta_i$, an i-th element of a parameter $\theta_{old}$ for the previous learning is $\theta_{old,i}$, the loss function for additional learning is $L(\theta)$, and the original loss function is $L_B(\theta)$. Furthermore, the following equation 1 holds where a value indicating how much the movement of the i-th parameter is likely to affect the previous learning when the i-th parameter moves is $F_i$.

[Math 1]

$$L(\theta) = L_B(\theta) + \sum \frac{\lambda}{2} F_i (\theta_i - \theta_{old,i})^2$$

However, if the data to be forgotten is given the random label according to a certain distribution by the relearning using EMC, an unnatural result may be output as a "forgotten" state. For example, it is considered that, when the handwritten 0 is input, 6 or 9 having a shape close to the forgotten 0 should be output, but there is a possibility that the values from 1 to 9 are evenly output.

[B] Embodiment

Hereinafter, an embodiment will be described with reference to the drawings. Note that the embodiment to be described below is merely an example, and there is no intention to exclude application of various modifications and techniques not explicitly described in the embodiment. In other words, for example, the present embodiment may be modified in various ways to be implemented without departing from the spirit of the embodiment. Furthermore, each drawing is not intended to include only the constituent elements illustrated in the drawing and may include other functions and the like.

Hereinafter, each same reference numeral represents a similar part in the drawings, and thus description thereof will be omitted.

[B-1] Configuration Example

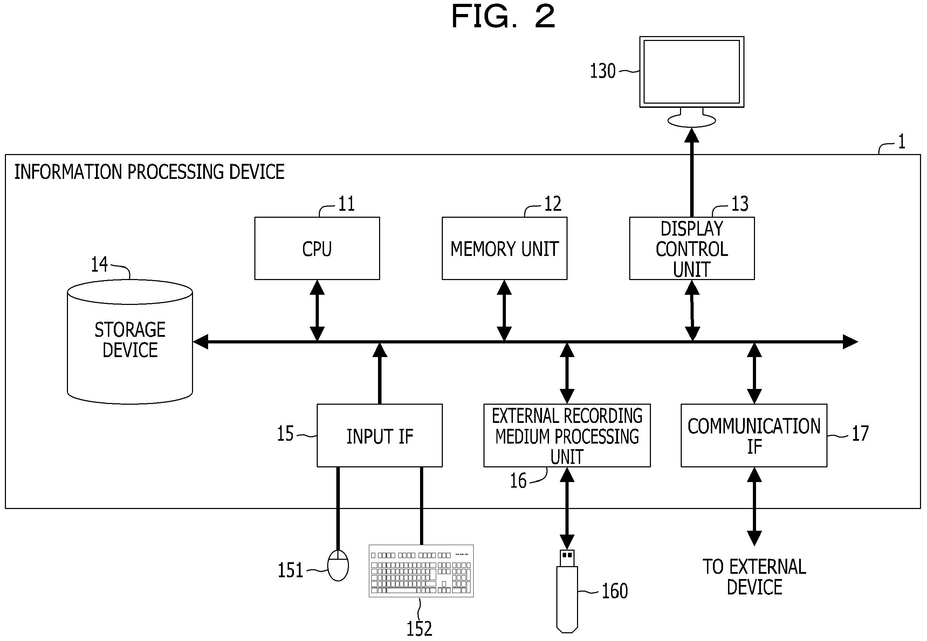

FIG.2 is a block diagram schematically illustrating a hardware configuration example of an information processing device 1 in an example of an embodiment.

As illustrated in FIG. 2, the information processing device 1 has a server function and includes a central processing unit (CPU) 11, a memory unit 12, a display control unit 13, a storage device 14, an input interface (IF) 15, and an external recording medium processing unit 16, and a communication IF 17.

The memory unit 12 is an example of a storage unit, which is, for example, a read only memory (ROM), a random access memory (RAM), and the like. Programs such as a basic input/output system (BIOS) may be written into the ROM of the memory unit 12. A software program of the memory unit 12 may be appropriately read and executed by the CPU 11. Furthermore, the RAM of the memory unit 12 may be used as a temporary recording memory or a working memory.

The display control unit 13 is connected to a display device 130 and controls the display device 130. The display device 130 is a liquid crystal display, an organic light-emitting diode (OLED) display, a cathode ray tube (CRT), an electronic paper display, or the like, and displays various kinds of information for an operator or the like. The display device 130 may be combined with an input device and may be, for example, a touch panel.

The storage device 14 is a storage device having high input/output (IO) performance, and for example, a dynamic random access memory (DRAM), a solid state drive (SSD), a storage class memory (SCM), and a hard disk drive (HDD) may be used.

The input IF 15 may be connected to an input device such as a mouse 151 and a keyboard 152, and may control the input device such as the mouse 151 and the keyboard 152. The mouse 151 and the keyboard 152 are examples of the input devices, and an operator performs various kinds of input operation through these input devices.

The external recording medium processing unit 16 is configured so that a recording medium 160 can be attached thereto. The external recording medium processing unit 16 is configured to be capable of reading information recorded in the recording medium 160 in a state where the recording medium 160 is attached thereto. In the present example, the recording medium 160 is portable. For example, the recording medium 160 is a flexible disk, an optical disk, a magnetic disk, a magneto-optical disk, a semiconductor memory, or the like.

The communication IF 17 is an interface for enabling communication with an external device.

The CPU 11 is an example of a processor, and is a processing device that performs various controls and calculations. The CPU 11 implements various functions by executing an operating system (OS) or a program loaded in the memory unit 12.

A device for controlling operation of the entire information processing device 1 is not limited to the CPU 11 and may be, for example, any one of an MPU, a DSP, an ASIC, a PLD, or an FPGA. Furthermore, the device for controlling operation of the entire information processing device 1 may be a combination of two or more of the CPU, MPU, DSP, ASIC, PLD, and FPGA. Note that the MPU is an abbreviation for a micro processing unit, the DSP is an abbreviation for a digital signal processor, and the ASIC is an abbreviation for an application specific integrated circuit. Furthermore, the PLD is an abbreviation for a programmable logic device, and the FPGA is an abbreviation for a field programmable gate array.

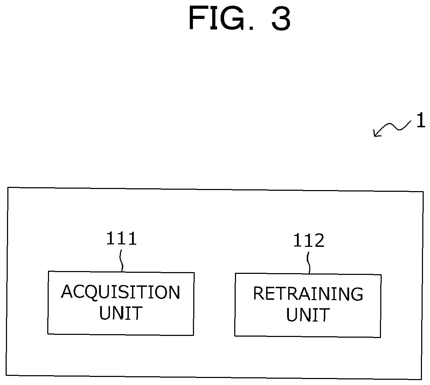

FIG. 3 is a block diagram schematically illustrating a software configuration example of the information processing device 1 illustrated in FIG. 2.

As illustrated in FIG. 3, the information processing device 1 functions as an acquisition unit 111 and a retraining unit 112.

The acquisition unit 111 acquires a first machine learning model trained using a training data set including specific data to be forgotten. Furthermore, the acquisition unit 111 acquires a second machine learning model that has not been trained using the specific data to be forgotten.

The retraining unit 112 retrains the first machine learning model so that an output of the first machine learning model and an output of the second machine learning model when data corresponding to the specific data is input get close to each other.

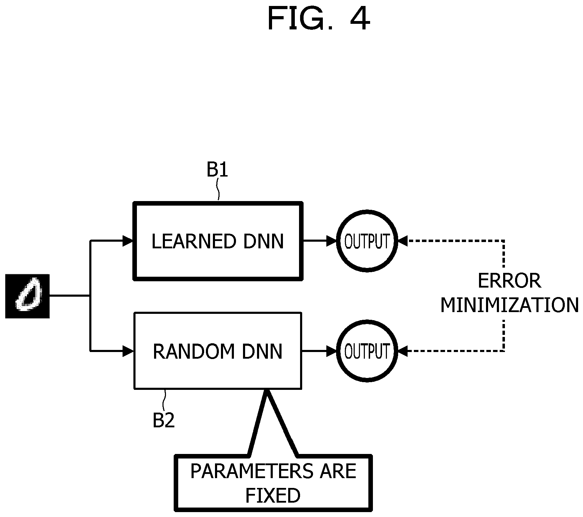

FIG. 4 is a diagram for describing relearning processing in the information processing device 1 illustrated in FIG. 2.

In the relearning processing in one example of the embodiment, a random DNN (in other words, the second machine learning model) randomly initialized with fixed parameters illustrated by sign B2 is prepared in addition to a learned DNN (in other words, the first machine learning model) illustrated by sign B1.

Then, the data to be forgotten is distilled into the random DNN. An output error is minimized when the same data (the handwritten 0 in the example illustrated in FIG. 4) is input to the learned DNN and the random DNN.

Here, distillation is a method of inputting the same data to the DNN with fixed parameters and the DNN to be learned to regress the DNN to be learned to the output of the DNN with fixed parameters.

The distillation is mainly used when compressing a large DNN. For example, by causing a small DNN (in other words, a student) to imitate the output of a large DNN (in other words, a teacher), thereby efficiently implementing a small DNN with similar performance.

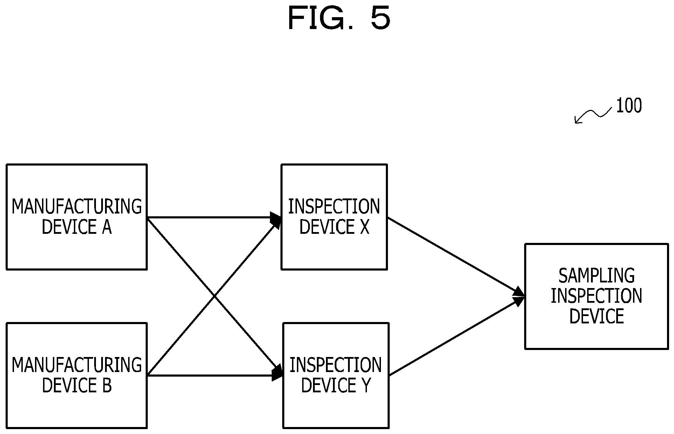

FIG. 5 is a diagram illustrating a production line 100 to be relearned for defect inspection in the information processing device 1 illustrated in FIG. 2.

In a production line for mechanical parts, semiconductors, and textile products, a certain product is manufactured by any of a plurality of manufacturing devices, and inspection data such as an appearance image is acquired by any of the plurality of inspection devices. Some products are labeled as non-defective/detective, defective type, or the like by sampling inspection.

A production line 100 illustrated in FIG. 5 includes manufacturing devices A and B, inspection devices X and Y, and a sampling inspection device.

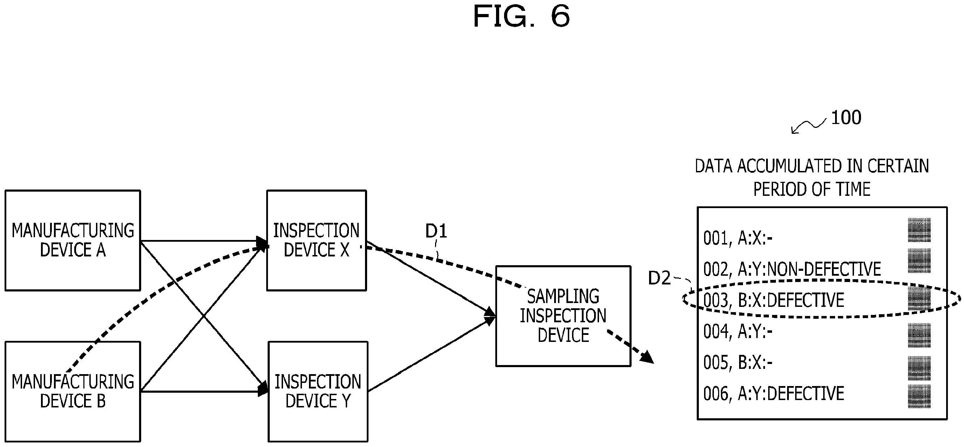

FIG. 6 is a diagram for describing data acquisition processing from the production line 100 illustrated in FIG. 5.

Information of the manufacturing device, the inspection device, inspection data, a sampling inspection result, and the like used for manufacturing each product is accumulated for a certain period of time and deleted after the elapse of a certain period of time.

In the example illustrated in FIG. 6, data indicated by IDs 001 to 006 are accumulated, and the manufacturing device, the inspection device, the sampling inspection result, and the appearance image of the product used for manufacturing are associated with each other.

For example, as illustrated by signs D1 and D2, the sampling inspection result of the product with ID 003 manufactured by the manufacturing device B and inspected by the inspection device X is registered as defective.

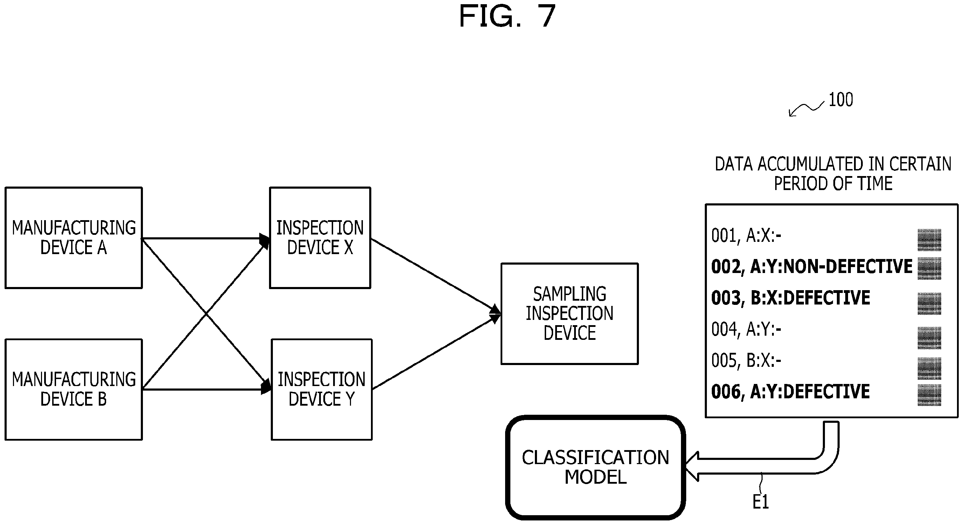

FIG. 7 is a diagram for describing defect inspection learning processing for the production line 100 illustrated in FIG. 5.

In the defect inspection learning processing, labeled data is used from the accumulated data to generate a classification model.

In the example illustrated in FIG. 7, as illustrated by sign E1, among the data with IDs 001 to 006 accumulated in a certain period of time, the data with IDs 002, 003, and 006 to which non-defective/defective is given as the sampling inspection result are learned in the classification model.

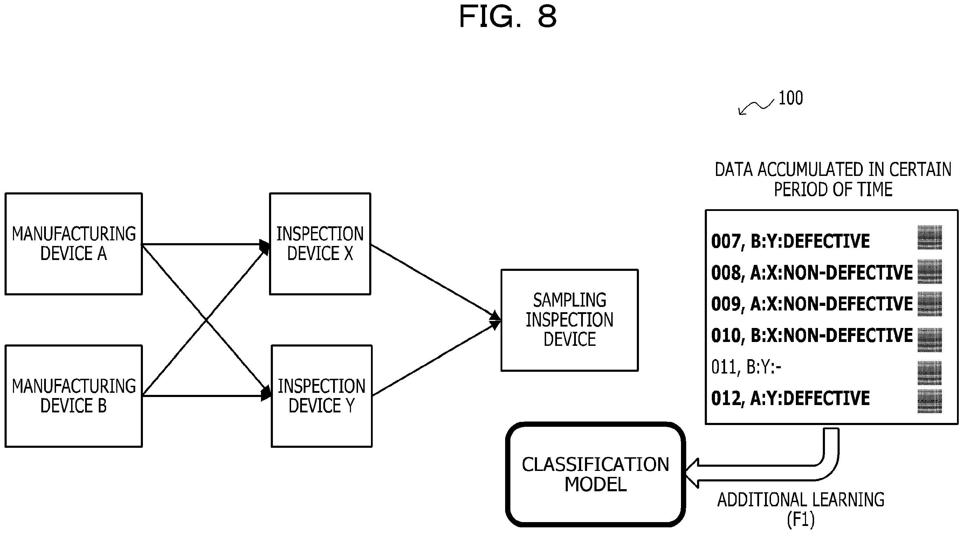

FIG. 8 is a diagram for describing defect inspection additional learning processing for the production line 100 illustrated in FIG. 5.

When the certain period of time elapses and the next data is accumulated, the classification model is updated by continuous learning (in other words, additional learning) using EWC or the like.

In the example illustrated in FIG. 8, as illustrated by sign F1, among the data with IDs 007 to 012 accumulated in a certain period of time, the data with IDs 007 to 010 and 012 to which non-defective/defective is given as the sampling inspection result are additionally learned in the classification model.

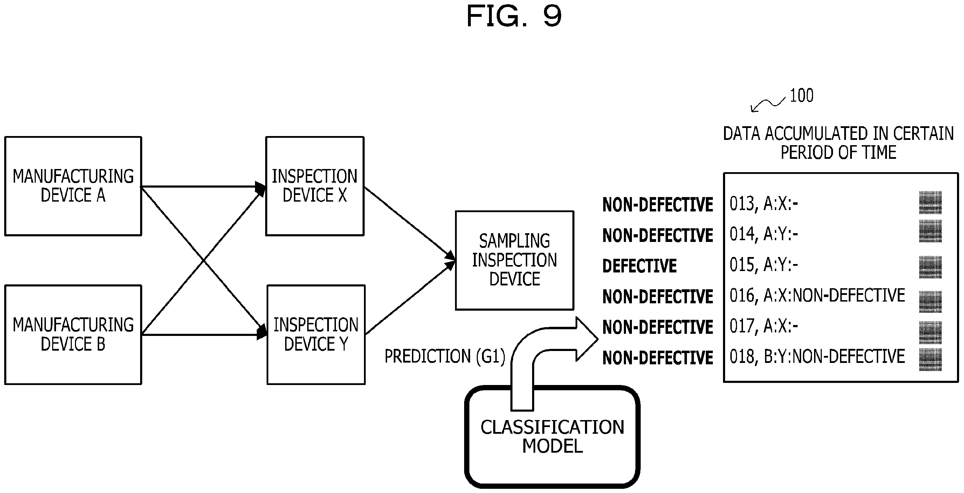

FIG. 9 is a diagram for describing defect inspection model application processing for the production line 100 illustrated in FIG. 5.

The classification model predicts non-defective/defective labels for each of accumulated product data.

In the example illustrated in FIG. 9, as illustrated by sign G1, the classification model predicts the data with IDs 013, 014, and 016 to 018 as the non-defective label and predicts the data with ID 015 as the defective label among the data accumulated for a certain period of time.

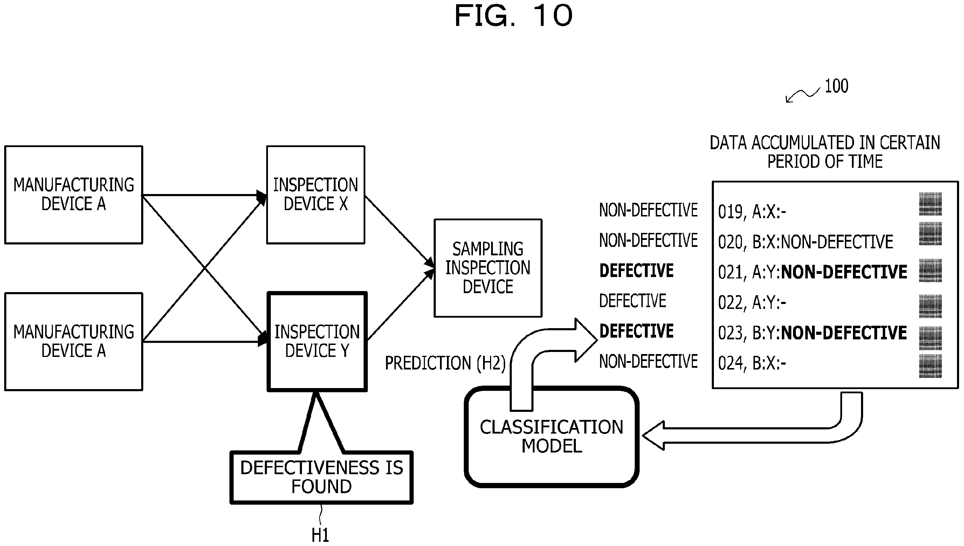

FIG. 10 is a diagram for describing defect inspection model evaluation processing for the production line 100 illustrated in FIG. 5.

In a case where the accuracy of the model deteriorates, the inspection device that causes defective learning data is checked as an analysis of the cause of the deterioration. In a case where defectiveness is found in the inspection device (for example, dirt on a camera lens for capturing the appearance image), it means that the data created by the inspection device has been contaminated, and the classification model has been learned with the contaminated data.

In the example illustrated in FIG. 10, defectiveness is found in the inspection device Y as illustrated by sign H1. Therefore, as illustrated by sign H2, among the data with IDs 019 to 024 accumulated for a certain period of time, the data with IDs 021 and 023 inspected by the inspection device Y have discrepancy between the sampling inspection result and the prediction result of the classification model. In FIG. 10, for the data with IDs 021 and 023, the prediction result of the classification model is output as defective although the sampling inspection result is non-detective.

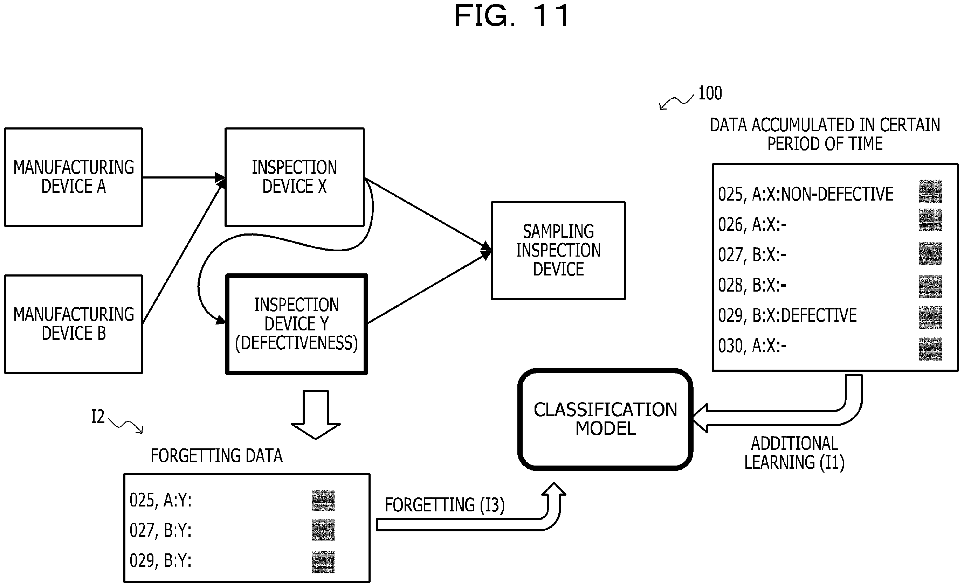

FIG.11 is a diagram for describing defect inspection forgetting processing for the production line 100 illustrated in FIG. 5.

The inspection device in which the defectiveness has been found is separated from the production line 100, and a part of the product is applied to the inspection device in which the defectiveness is found, and forgetting data is collected for a certain period of time. Then, by applying the forgetting data to the classification model, the influence of the contaminated data is recovered.

In the example illustrated in FIG. 11, as illustrated by sign I1, the data with IDs 025 to 030 accumulated for a certain period of time is additionally learned in the classification model. Meanwhile, as illustrated by sign 12, the data of IDs 025, 027, and 029 inspected by the inspection device Y in which the defectiveness has been found are acquired as the forgetting data. Then, as illustrated by sign 13, by applying the forgetting data to the classification model, the data inspected using the inspection device Y in the classification model is forgotten.

[B-2] Operation Example

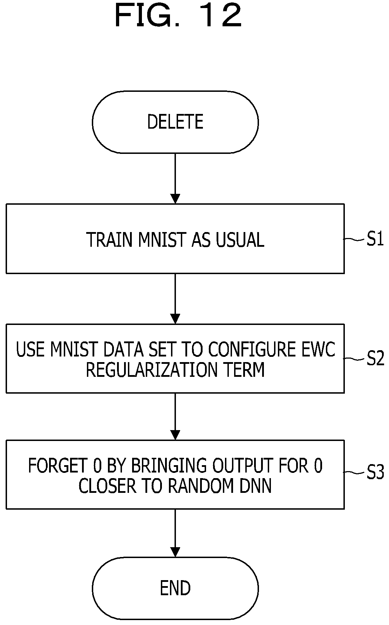

The relearning processing in the information processing device 1 illustrated in FIG. 2 will be described with reference to the flowchart (steps S1 to S3) illustrated in FIG. 12.

In the relearning processing illustrated in FIG. 12, after learning Mixed National Institute of Standards and Technology database (MNIST), which is the data set of handwritten numbers from 0 to 9, 0 is forgotten. While distilling to the random DNN is performed for 0, EWC is also used for preventing the catastrophic forgetting.

The retraining unit 112 trains MNIST as usual (step S1).

The retraining unit 112 uses the MNIST data set to configure the EWC regularization term (step S2).

The retraining unit 112 forgets 0 by bringing the output for 0 closer to the random DNN (step S3). In the forgetting processing, backpropagation or an error propagation method is performed by differentiating the loss function illustrated by the following Math 2. Then, the relearning processing ends.

[Math 2]

$$MSE\big(DNN(x, \theta), RandomDNN(x)\big) + \lambda EWC(\theta, \theta_{old})$$

In the equation of Math 2, the first term is a term for forgetting 0, and the second term is a term for not forgetting 1 to 9. The loss function is calculated so that the sum of the first and second terms is minimized. MSE is a mean square error, DNN is the DNN to be learned, RandomDNN is the random DNN with fixed parameters, x is input data, and $\theta$ is the DNN parameter to be learned. Furthermore, EWC is the regularization term by EWC, $\lambda$ is a hyperparameter that determines how much EWC is emphasized, and $\theta_{old}$ is a parameter in the previous learning about the DNN to be learned.

[C] Effects

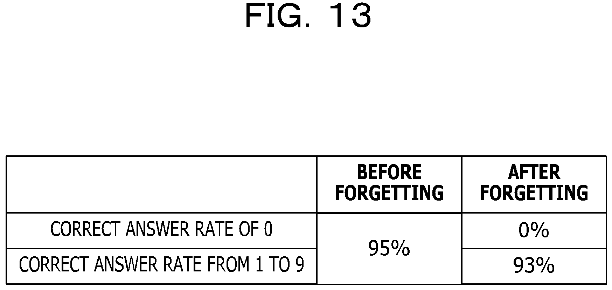

FIG. 13 is a table exemplifying correct answer rates of the learning model before and after forgetting the learning data in the information processing device 1 illustrated in FIG. 2.

Due to the forgetting operation, the correct answer rate of 0 after forgetting is 0%. Meanwhile, the correct answer rate from 1 to 9 is 95% before forgetting whereas 93% after forgetting, which shows no significant change.

According to the above-described example of the embodiment, the following effects may be obtained, for example.

The acquisition unit 111 acquires the first machine learning model trained using the training data set including the specific data and the second machine learning model not trained with the specific data. The retraining unit 112 retrains the first machine learning model so that an output of the first machine learning model and an output of the second machine learning model when data corresponding to the specific data is input get close to each other. Thereby, the learned model may be modified independently of past training data. In other words, any data may be selectively forgotten from the training data set.

The second machine learning model is a deep neural network in which the first machine learning model is randomly initialized and the parameters are fixed. Thereby, the learned data may be efficiently modified.

The retraining unit 112 performs the retraining on the basis of a loss function represented by a sum of a variable for forgetting the specific data and a variable for not forgetting data other than the specific data of the training data set. Thereby, the learned data may be efficiently modified.

[D] Others

The disclosed technique is not limited to the above-described embodiment, and various modifications may be made without departing from the spirit of the present embodiment. Each of the configurations and processes according to the present embodiment may be selected as needed, or may be combined as appropriate.

**Claims**

1. A program that causes a computer to execute a process, the process comprising:

    acquiring a first machine learning model trained using a training data set including specific data and a second machine learning model not trained with the specific data; and
    retraining the first machine learning model so that an output of the first machine learning model and an output of the second machine learning model when data corresponding to the specific data is input get close to each other.

2. The program according to claim 1, wherein the second machine learning model is a deep neural network in which the first machine learning model is randomly initialized and a parameter is fixed.

3. The program according to claim 1 or 2, for causing the computer to execute processing comprising: performing the retraining on the basis of a loss function represented by a sum of a variable to forget the specific data and a variable not to forget data other than the specific data of the training data set.

4. An information processing device comprising:

    an acquisition unit configured to acquire a first machine learning model trained using a training data set including specific data and a second machine learning model not trained with the specific data; and
    a retraining unit configured to retrain the first machine learning model so that an output of the first machine learning model and an output of the second machine learning model when data corresponding to the specific data is input get close to each other.

5. The information processing device according to claim 4, wherein the second machine learning model is a deep neural network in which the first machine learning model is randomly initialized and a parameter is fixed.

6. The information processing device according to claim 4 or 5, wherein the retraining unit performs the retraining on the basis of a loss function represented by a sum of a variable to forget the specific data and a variable not to forget data other than the specific data of the training data set.

7. An information processing method in which a computer executes processing comprising:

    acquiring a first machine learning model trained using a training data set including specific data and a second machine learning model not trained with the specific data; and
    retraining the first machine learning model so that an output of the first machine learning model and an output of the second machine learning model when data corresponding to the specific data is input get close to each other.

8. The information processing method according to claim 7, wherein the second machine learning model is a deep neural network in which the first machine learning model is randomly initialized and a parameter is fixed.

9. The information processing method according to claim 7 or 8, in which the computer executes processing comprising: performing the retraining on the basis of a loss function represented by a sum of a variable to forget the specific data and a variable not to forget data other than the specific data of the training data set.

# FIG. 1

□ LOW ERROR FOR TASK B ——— EWC
▨ LOW ERROR FOR TASK A ─ ─ ─ L$_2$

— · no penalty

A1 — LOSS FUNCTION VALUE OF TASK A (PREVIOUS LEARNING TASK) DOES NOT INCREASE ($\fallingdotseq$ IS NOT FORGOTTEN) EVEN IF SPECIFIC PARAMETER IS MOVED

$\theta_A$

INAPPROPRIATE PARAMETERS ARE MOVED ONLY BY SIMPLY PERFORMING REGULARIZATION SO AS NOT TO MOVE PARAMETERS — A2

EP 3 979 139 A1

# FIG. 2

INFORMATION PROCESSING DEVICE

- 11 CPU
- 12 MEMORY UNIT
- 13 DISPLAY CONTROL UNIT
- 130 (display)
- 14 STORAGE DEVICE
- 15 INPUT IF
- 16 EXTERNAL RECORDING MEDIUM PROCESSING UNIT
- 17 COMMUNICATION IF
- 151 (mouse)
- 152 (keyboard)
- 160 (USB flash drive)
- TO EXTERNAL DEVICE
- 1

EP 3 979 139 A1

# FIG. 3

1

| | |
|---|---|
| 111 | 112 |
| ACQUISITION UNIT | RETRAINING UNIT |

# FIG. 4

# FIG. 5

# FIG. 6

EP 3 979 139 A1

MANUFACTURING DEVICE A

MANUFACTURING DEVICE B

INSPECTION DEVICE X

INSPECTION DEVICE Y

SAMPLING INSPECTION DEVICE

D1

D2

100

DATA ACCUMULATED IN CERTAIN PERIOD OF TIME

001, A:X:-
002, A:Y:NON-DEFECTIVE
003, B:X:DEFECTIVE
004, A:Y:-
005, B:X:-
006, A:Y:DEFECTIVE

# FIG. 7

SAMPLING INSPECTION DEVICE

MANUFACTURING DEVICE A → INSPECTION DEVICE X

MANUFACTURING DEVICE B → INSPECTION DEVICE Y

~100

DATA ACCUMULATED IN CERTAIN PERIOD OF TIME

001, A:X:-
**002, A:Y:NON-DEFECTIVE**
**003, B:X:DEFECTIVE**
004, A:Y:-
005, B:X:-
**006, A:Y:DEFECTIVE**

CLASSIFICATION MODEL

E1

# FIG. 8

100

MANUFACTURING DEVICE A → INSPECTION DEVICE X

MANUFACTURING DEVICE B → INSPECTION DEVICE Y

→ SAMPLING INSPECTION DEVICE

DATA ACCUMULATED IN CERTAIN PERIOD OF TIME

**007, B:Y:DEFECTIVE**
**008, A:X:NON-DEFECTIVE**
**009, A:X:NON-DEFECTIVE**
**010, B:X:NON-DEFECTIVE**
011, B:Y:-
**012, A:Y:DEFECTIVE**

CLASSIFICATION MODEL

ADDITIONAL LEARNING (F1)

EP 3 979 139 A1

# FIG. 9

EP 3 979 139 A1

# FIG. 10

EP 3 979 139 A1

MANUFACTURING DEVICE A

MANUFACTURING DEVICE A

INSPECTION DEVICE X

INSPECTION DEVICE Y

DEFECTIVENESS IS FOUND

H1

SAMPLING INSPECTION DEVICE

PREDICTION (H2)

CLASSIFICATION MODEL

DATA ACCUMULATED IN CERTAIN PERIOD OF TIME

100

NON-DEFECTIVE — 019, A:X:-
NON-DEFECTIVE — 020, B:X:NON-DEFECTIVE
**DEFECTIVE** — 021, A:Y:**NON-DEFECTIVE**
DEFECTIVE — 022, A:Y:-
**DEFECTIVE** — 023, B:Y:**NON-DEFECTIVE**
NON-DEFECTIVE — 024, B:X:-

# FIG. 11

FORGETTING DATA

| | |
|---|---|
| 025, A:Y: | |
| 027, B:Y: | |
| 029, B:Y: | |

DATA ACCUMULATED IN CERTAIN PERIOD OF TIME

| | |
|---|---|
| 025, A:X:NON-DEFECTIVE | |
| 026, A:X:- | |
| 027, B:X:- | |
| 028, B:X:- | |
| 029, B:X:DEFECTIVE | |
| 030, A:X:- | |

MANUFACTURING DEVICE A

MANUFACTURING DEVICE B

INSPECTION DEVICE X

INSPECTION DEVICE Y (DEFECTIVENESS)

SAMPLING INSPECTION DEVICE

CLASSIFICATION MODEL

ADDITIONAL LEARNING (I1)

FORGETTING (I3)

I2

100

EP 3 979 139 A1

# FIG. 12

DELETE

TRAIN MNIST AS USUAL — S1

USE MNIST DATA SET TO CONFIGURE EWC REGULARIZATION TERM — S2

FORGET 0 BY BRINGING OUTPUT FOR 0 CLOSER TO RANDOM DNN — S3

END

# FIG. 13

|  | BEFORE FORGETTING | AFTER FORGETTING |
|---|---|---|
| CORRECT ANSWER RATE OF 0 | 95% | 0% |
| CORRECT ANSWER RATE FROM 1 TO 9 |  | 93% |

Europäisches
Patentamt

European
Patent Office

Office européen
des brevets

# EUROPEAN SEARCH REPORT

Application Number

EP 21 18 3685

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YURI BURDA ET AL: "Exploration by Random Network Distillation", ARXIV.ORG, CORNELL UNIVERSITY LIBRARY, 201 OLIN LIBRARY CORNELL UNIVERSITY ITHACA, NY 14853, 30 October 2018 (2018-10-30), XP080933274, * section 2 * | 1-9 | INV. G06N3/04 G06N3/08 |
| X | ADITYA GOLATKAR ET AL: "Eternal Sunshine of the Spotless Net: Selective Forgetting in Deep Networks", ARXIV.ORG, CORNELL UNIVERSITY LIBRARY, 201 OLIN LIBRARY CORNELL UNIVERSITY ITHACA, NY 14853, 12 November 2019 (2019-11-12), XP081633384, * abstract, sections 3, 4, propositions 3, 4; figure 3 * | 1-9 | |
| X,P | TOMOHIRO HAYASE ET AL: "Selective Forgetting of Deep Networks at a Finer Level than Samples", ARXIV.ORG, CORNELL UNIVERSITY LIBRARY, 201 OLIN LIBRARY CORNELL UNIVERSITY ITHACA, NY 14853, 22 December 2020 (2020-12-22), XP081844072, * the whole document * | 1-9 | TECHNICAL FIELDS SEARCHED (IPC) G06N |

The present search report has been drawn up for all claims

| Place of search | Date of completion of the search | Examiner |
|---|---|---|
| Munich | 3 February 2022 | Cordara, Giovanni |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **KIRKPATRICK, JAMES et al.** Overcoming catastrophic forgetting in neural networks. *Proceedings of the national academy of sciences,* 2017, vol. 114.13, 3521-3526